Europäisches Patentamt

European Patent Office

Office européen des brevets

(19)

(11) Veröffentlichungsnummer: **0 348 339**
**A1**

(12) **EUROPÄISCHE PATENTANMELDUNG**

(21) Anmeldenummer: **89710058.2**

(22) Anmeldetag: **23.06.89**

(51) Int. Cl.4: **C 02 F 1/68**
**B 67 D 5/52**

(30) Priorität: **23.06.88 DE 3821132**

(43) Veröffentlichungstag der Anmeldung:
**27.12.89 Patentblatt 89/52**

(84) Benannte Vertragsstaaten: **ES GR**

(71) Anmelder: **Henkel Kommanditgesellschaft auf Aktien**
**Postfach 1100 Henkelstrasse 67**
**D-4000 Düsseldorf 1 (DE)**

(72) Erfinder: **Brügel, Emil**
**An Haus Neurath 6**
**D-4048 Grevenbroich 3 (DE)**

(54) **Dosieranlage für Flüssigadditive insbesondere hoher Viskositäten.**

(57) Die Erfindung betrifft eine Dosieranlage für Flüssigadditive (5) insbesondere hoher Viskositäten mit einer Dosierpumpe (1) zum kontinuierlichen Behandeln von Flüssigkeiten (9). Um eine schnellere Wirksamkeit des Additivs (5) in der zu behandelnden Flüssigkeit zu erreichen, wird eine weitere Pumpe (2) vorgeschlagen, deren Eingang an den Ausgang der Dosierpumpe und an die zu behandelnde Flüssigkeit angeschlossen ist.

Fig. 1

EP 0 348 339 A1

**Beschreibung**

## Dosieranlage für Flüssigadditive insbesondere hoher Viskositäten

Die Erfindung betrifft eine Dosieranlage für Flüssigadditive insbesondere hoher Viskositäten mit einer Dosierpumpe zum kontinuierlichen Behandeln von Flüssigkeiten. Unter hohen Viskositäten sind Viskositäten ab 300 mPas zu verstehen.

Insbesondere zum Behandeln von Abwasser müssen Ströme von Flüssigadditiven kontinuierlich in sehr kleinen Mengen zum Abwasser zugegeben werden. Diese Flüssigadditive werden dabei auf oder in die zu behandelnden Klärbecken dosiert. Bei dieser Abwasserbehandlung ist die gute Durchmischung des Additivs mit dem Abwasser von großer Bedeutung.

Bei einigen Flüssigadditiven tritt das Problem auf, daß sie ausgesprochen schwer dosierbar sind und sich außerdem nur relativ langsam im zu behandelnden Abwasser verteilen. Dieses Problem tritt insbesondere bei Flüssigadditiven hoher Viskositäten auf.

Der Erfindung liegt daher die Aufgabe zugrunde, eine Dosieranlage der eingangs genannten Art zu schaffen, die eine bessere Dosierbarkeit und eine bessere Durchmischung der Flüssigadditive ermöglicht.

Diese Aufgabe wird erfindungsgemäß bei einer Dosieranlage der eingangs genannten Art durch eine weitere Pumpe, deren Eingang an den Ausgang der Dosierpumpe und an die zu behandelnde Flüssigkeit angeschlossen ist, gelöst. Diese weitere Pumpe saugt sowohl Abwasser als auch die sehr kleinen Mengenströme des Flüssigadditivs an. Innerhalb der Pumpe werden diese Flüssigkeiten miteinander intensiv gemischt. Durch diese Vorvermischung läßt sich eine sehr viel bessere Vermischung des Additivs mit dem Abwasser im Klärbekken und damit eine schnellere Wirksamkeit des Additivs erreichen. Durch die Vorvermischung mit dem Abwasser lassen sich ferner die nun größeren Mengenströme besser dosieren. In der erfindungsgemäßen Dosieranlage wird das Additiv vorvermischt, ohne daß Frischwasser in das Abwassersystem eingetragen wird. Dies wird erreicht, indem Abwasser zur Vorvermischung verwendet wird.

Eine besonders schnelle Wirksamkeit des Additivs wird erreicht durch an den Ausgang der weiteren Pumpe angeschlossene, über der Oberfläche der zu behandelnden Flüssigkeit angeordnete Einstoff-Düsen zum großflächigen Aufbringen des Additiv-Flüssigkeits-Gemisches auf die Flüssigkeitsoberfläche. Bei dieser großflächig aufgebrachten Dosierung wird durch die Vorvermischung eine belästigende Aerosol-Bildung vermieden, wie sie bei der Dosierung des unvermischten Flüssigadditivs durch eine zum Verdüsen von hochviskosen Stoffen erforderliche Zweistoffdüse unvermeidbar wäre.

Ein besonders einfacher Aufbau der Dosieranlage und eine besonders gute Vorvermischung ergibt sich, wenn die weitere Pumpe eine selbstansaugende Kreiselpumpe ist. In diesem Fall kann die weitere Pumpe nämlich auch oberhalb der Abwasseroberfläche angeordnet sein.

Bei der Dosierpumpe ist es besonders vorteilhaft, wenn sie eine Membran-, Membrankolben- oder Kolbenpumpe ist.

Das Verhältnis des Flüssigadditivs zum Abwasser läßt sich nicht nur durch die erste Dosierpumpe, sondern auch dadurch einstellen, wenn ein die weitere Pumpe überbrückender, ein Durchflußregelventil aufweisender Bypass vorgesehen ist. An diesem Ventil läßt sich das Verhältnis einstellen.

Ein Ausführungsbeispiel der Erfindung ist in der Zeichnung dargestellt und wird im folgenden näher beschrieben.

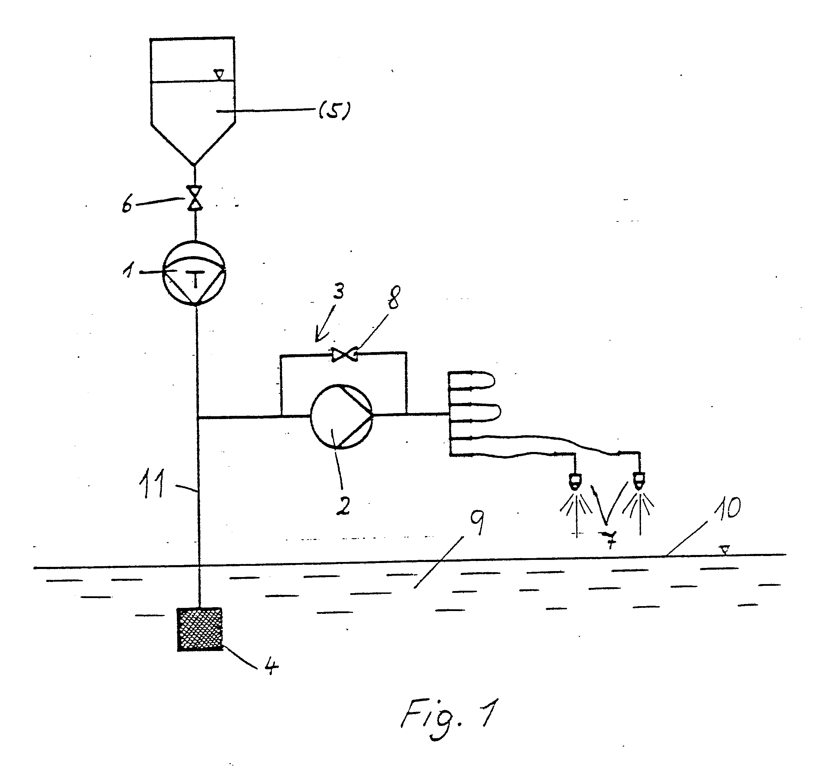

Figur 1 zeigt eine Dosieranlage gemäß der Erfindung zum kontinuierlichen Dosieren eines Entschäumers. Die Dosieranlage besteht im wesentlichen aus der Dosierpumpe (1) und der als Misch- bzw. Suspendierpumpe dienenden weiteren Pumpe (2), die als selbstansaugende Kreiselpumpe ausgeführt ist. Die Dosierpumpe (1) ist mit ihrem Eingang an eine Vorlage (5) für das Flüssigadditiv angeschlossen. Mit dem Eingang der weiteren Pumpe (2) ist ein im zu behandelnden Abwasser (9) angeordneter Ansaugsiebkorb (4) über eine Saugleitung (11) und der Ausgang der Dosierpumpe (1) verbunden. An den Ausgang der weiteren Pumpe (2) sind Einstoffaxialdüsen (7) angeschlossen, die zum großflächigen Dosieren der vorvermischten Flüssigkeit auf die Flüssigkeitsoberfläche (10) des Abwassers ausgelegt sind. Die weitere Pumpe (2) ist durch einen Bypass (3) überbrückt, der ein Durchflußregelventil (8) aufweist.

Die Dosieranlage funktioniert wie folgt:

Die Dosierpumpe (1) erhält über eine Absperrarmetur (6) aus der Vorlage (5) das noch unverdünnte Flüssigadditiv. Die Pumpe (1) dosiert kontinuierlich dieses Additiv in die Saugleitung (11) der weiteren Pumpe (2). Diese Pumpe saugt aus dem mit dem Additiv zu beschickenden Klärwasserbecken Abwasser (9) über den Ansaugsiebkorb (4) an. Abwasser und Additiv gelangen gemeinsam in die weitere Pumpe (2), wo sie intensiv gemischt werden. Über das Durchflußregelventil (8) im Bypass (3) läßt sich die Bypassmenge und damit das Verhältnis von Additiv zu Abwasser einstellen. Auf der Druckseite der Pumpe (2) tritt die Mischung je nach Affinität des Additivs zum Abwasser (9) als homogene Lösung oder als Emulsion aus. Diese Lösung oder Emulsion wird über die Einstoff-Düsen (7) großflächig auf die Klärbeckenoberfläche (10) aufgebracht.

In einem praktischen Ausführungsbeispiel wurde als Dosierpumpe (1) eine Membran-Dosierpumpe des Herstellers Pro-Minent des Typs B 25.001 und als weitere Pumpe (2) eine Zentrifugalpumpe des Herstellers DIA-Pumpen von Typ SRV/SOV 211 eingesetzt. Als Düsen (7) wurden Axialvollkegeldüsen des Typs 460.748.16 CE des Herstellers Lechler verwendet.

Bezugszeichenliste

(1) Dosierpumpe
(2) weitere Pumpe
(3) Bypass
(4) Ansaugsiebkorb
(5) Vorlage
(6) Absperrarmatur
(7) Einstoff-Düsen, Einstoffaxialdüsen
(8) Durchflußregelventil
(9) Flüssigkeit, zu behandelnde
(10) Flüssigkeitsoberfläche
(11) Saugleitung

**Patentansprüche**

1. Dosieranlage für Flüssigadditive insbesondere hoher Viskositäten mit einer Dosierpumpe (1) zum kontinuierlichen Behandeln von Flüssigkeiten (9), gekennzeichnet durch eine weitere Pumpe (2), deren Eingang an den Ausgang der Dosierpumpe (1) und an die zu behandelnde Flüssigkeit (9) angeschlossen ist.

2. Dosieranlage nach Anspruch 1, gekennzeichnet durch an den Ausgang der weiteren Pumpe (2) angeschlossene, über der Oberfläche (10) der zu behandelnden Flüssigkeit (9) angeordnete Einstoff-Düsen (7) zum großflächigen Aufbringen des Additiv-Flüssigkeits-Gemischs auf die Flüssigkeitsoberfläche (10).

3. Dosieranlage nach Anspruch 1 oder 2, dadurch gekennzeichnet,
daß die weitere Pumpe (2) eine selbstansaugende Kreiselpumpe ist.

4. Dosieranlage nach einem der Ansprüche 1 bis 3, dadurch gekennzeichnet,
daß die Dosierpumpe (1) eine Membran-, Membrankolben- oder Kolbenpumpe ist.

5. Dosieranlage nach einem der Ansprüche 1 bis 4, gekennzeichnet durch
einen die weitere Pumpe (2) überbrückenden, ein Durchflußregelventil (8) aufweisenden Bypass (3).

Fig. 1

## EUROPÄISCHER RECHERCHENBERICHT

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-B-2 012 358 (GOLDSCHMIDT AG) * Figur 1; Spalte 2, Zeile 60 - Spalte 3, Zeile 33 * | 1,3-5 | C 02 F 1/68 B 67 D 5/52 |
| Y | --- | 2 | |
| Y | WORLD PATENT INDEX, Nr. 81-42817D/24, Derwent Publications Ltd, London, GB; & JP-A-56 044 008 (AGENCY OF IND. SCI. TECH.) 23-04-1981 * Zusammenfassung * --- | 2 | |
| A | DE-A-3 718 818 (PARDIKES) --- | | |
| A | DE-A-2 060 436 (PAKO CORP.) --- | | |
| A | FR-A- 995 916 (N.V. ONDERZOEKINGSINSTITUUT RESEARCH) --- | | |
| A | PATENT ABSTRACTS OF JAPAN, Band 8, Nr. 41 (C-211)[1478], 22. Februar 1984; & JP-A-58 202 025 (TORAY ENGINEERING K.K.) 25-11-1983 ----- | | |

**RECHERCHIERTE SACHGEBIETE (Int. Cl.4)**

B 67 D
B 01 F
C 02 F

Der vorliegende Recherchenbericht wurde für alle Patentansprüche erstellt

| Recherchenort | Abschlußdatum der Recherche | Prüfer |
|---|---|---|
| DEN HAAG | 14-09-1989 | DEUTSCH J.P.M. |